# EUROPÄISCHE PATENTSCHRIFT

(11) **EP 2 417 694 B1**
(45) Veröffentlichungstag und Bekanntmachung des Hinweises auf die Patenterteilung: **29.04.2015**
(21) Anmeldenummer: 10700375.8
(22) Anmeldetag: 12.01.2010
(51) Int. Cl.: H02K 3/51

(54) **DYNAMOELEKTRISCHE MASCHINE**
DYNAMOELECTRIC MACHINE
MACHINE DYNAMOÉLECTRIQUE

(30) Priorität: 08.04.2009 DE 102009016516
(43) Veröffentlichungstag der Anmeldung: 15.02.2012
(73) Patentinhaber: Voith Patent GmbH, 89522 Heidenheim (DE)
(72) Erfinder: HENNING, Holger, 89537 Giegen (DE); EILEBRECHT, Philipp, 89522 Heidenheim (DE); VESER, Stefan, 89558 Treffelhausen (DE); HILDINGER, Thomas, 89522 Heidenheim (DE)
(74) Vertreter: Dr. Weitzel & Partner
(86) Internationale Anmeldenummer: PCT/EP2010/000098
(87) Internationale Veröffentlichungsnummer: WO 2010/115481

(56) Entgegenhaltungen:
- EP-A2- 0 736 953
- GB-A- 1 112 129
- JP-A- 4 193 043
- JP-A- 8 098 444
- JP-A- 9 308 165

## Beschreibung

Die Erfindung betrifft eine dynamoelektrische Maschine, beispielsweise einen elektrischen Generator. Die Erfindung befasst sich insbesondere mit der konstruktiven Ausgestaltung einer Konstruktion, durch welche die Wickelköpfe des Rotors gegen Fliehkräfte gesichert sind.

Eine solche dynamoelektrische Maschine umfasst die folgenden Bauteile: einen Hauptläufer, ringförmige Wickelköpfe, die axial neben dem Hauptläufer und zu diesem koaxial angeordnet ist, einen Tragring, der radial innerhalb der Wickelköpfe und zu diesen koaxial angeordnet ist.

Zur Befestigung der Spulenköpfe von Rotorwicklungen ist es unter anderem üblich, die Spulenköpfe innen durch einen ringartigen Wicklungsträger abzustützen und die Spulenköpfe auf diesem Wicklungsträger mit Hilfe von Bandagen zu fixieren. Insbesondere bei größeren Maschinen kann anstelle einer Bandage auch ein mehrfach geteilter Ring verwendet werden, der mit Isolierzwischenlagen an den Wickelköpfen anliegt und mit Hilfe von Schrauben am Wicklungsträger fixiert wird. Bei besonders großen Fliehkräften können auch Kappen über die Spulenköpfe geschoben werden. Derartige Kappen sind insbesondere zur Fixierung der Wickelköpfe des Rotors von Turbogeneratoren üblich (Buch "Leitfaden der Elektrotechnik" - Band 3 - "Konstruktions- und Festigkeitsberechnungen elektrischer Maschinen" Verfasser: Dr. C. von Dobbeler, 1962, B.G. Teubner Verlagsgesellschaft Stuttgart, Seiten 25 bis 29 und 58 bis 62; DE 26 29 574 B2; DE-PS 7 01 612). Es ist weiterhin bekannt, die von der umlaufenden Erregerspule einer Synchronmaschine ausgehenden Fliehkräfte mit Hilfe von an der äußeren Stirnseite der Erregerspule anliegenden Haltebrücken aufzunehmen, die ihrerseits durch am Laufkörper der Maschine befestigte, auf Zug beanspruchte Bolzen gehalten werden. (DE-PS 9 50 659).

Die Aufgabe der Fixierung von Wickelköpfen eines Rotors stellt sich in besonderer Weise bei läufergespeisten Schleifringläufermaschinen, wie sie neuerdings für drehzahlregelbare Wasserkraft-Motor-Generatoren für Pumpseicherbetrieb zum Einsatz kommen. Für derartige Generator-Motoren ist u. a. charakteristisch, dass der Rotor einen Durchmesser von 3 bis 7 m aufweisen kann. Zur Fixierung der Wickelköpfe eines solchen Rotors ist es bekannt, am Rotorkörper über Stützböcke Halteringe anzuordnen, in denen die Enden von U-förmigen Zugbolzen fixiert sind. Je ein Zugbolzen übergreift dabei mit seinem U-förmigen Bereich einen Wicklungskopf (Bericht 11 -104 "Development and achieved commercial operation ... for a pumped storage power plant", der CIGRE-Tagung 1992, 30. August bis 5. September). Eine derartige Wickelkopfbefestigung ist konstruktiv und montagetechnisch sehr aufwendig. Dies is auch in der JP 04-193043 so beschrieben.

DE 195 19 127 C1 beschreibt eine dynamoelektrische Maschine der genannten Bauart. Dabei umfasst die Sicherungseinrichtung gegen Fliehkräfte Zugstäbe, die mit ihren radial inneren Enden am Tragring, und mit ihren radial äußeren Enden an Lagerkörpern angreifen, die radial außen an den Wickelköpfen anliegen.

Die Wickelköpfe sind stromdurchflossen. Sie werden daher auf höhere Temperaturen erwärmt und dehnen sich aus. Der Tragring hingegen ist nicht stromdurchflossen und bleibt daher kalt. Um hieraus resultierende mechanische Spannungen zu vermeiden, wird dem Luftspalt zwischen dem Tragring und den Wickelköpfen Kühlluft zugeführt, meist von der Stirnseite der Maschine her. Die Kühlluft tritt im Radialspalt zwischen den Wickelköpfen ein, durchströmt diese in radialer Richtung und tritt außerhalb der Wickelköpfe wieder aus. Die Praxis zeigt, dass diese Art von Kühlung nicht ausreicht.

Der Erfindung liegt die Aufgabe zugrunde, eine dynamoelektrische Maschine gemäß dem Oberbegriff von Anspruch 1 derart zu gestalten, dass einerseits eine zuverlässige Sicherung der Wickelköpfe gegen radiales Aufweiten zufolge der Fliehkräfte gewährleistet ist, und andererseits eine ausreichende Kühlung, die unzulässige Spannungen zwischen den Wickelköpfen, den Zugstäben und dem Tragring vermeidet.

Diese Aufgabe wird durch die Merkmale von Anspruch 1 gelöst.

Demgemäß werden die lichten Weiten der Bohrungen im Tragring zum Hindurchführen der Zugstäbe mit Übermaß ausgestattet. Zwischen einem Zugstab und der Leibung der zugehörenden Bohrung im Tragring besteht somit ein (ringförmiger) Luftspalt. Weiterhin werden die Lagerungen der Enden eines jeden Zugstabes derart gestaltet, dass der Zugstab eine begrenzte Kippbewegung aus der Radialrichtung ausführen kann.

Bei Nicht-Betrieb der dynamoelektrischen Maschine verlaufen die Zugstäbe im Wesentlichen in radialer Richtung. Nimmt die Maschine ihren Betrieb auf, so erwärmen sich die Wickelköpfe durch den Stromfluss und dehnen sich in axialer Richtung aus. Der Tragring hingegen bleibt kalt und dehnt sich daher nicht aus. Die Zugstäbe können der Ausdehnung der Wickelköpfe folgen, da sie aufgrund der vergrößerten lichten Weite der Bohrungen im Tragring eine Neigung gegen die Radialrichtung und infolge der entsprechenden Gestaltung der Lagerkörper am radial auswärtigen und am radial einwärtigen Ende eine Neigung gegen die Radialrichtung einnehmen können.

Die Erfindung ist anhand der Zeichnung näher erläutert. Darin ist im Einzelnen Folgendes dargestellt:
- Figur 1: zeigt den prinzipiellen Aufbau einer dynamoelektrischen Maschine in einem achssenkrechten Schnitt.
- Figur 2: zeigt in vergrößerter Darstellung einen Axialschnitt durch den Endbereich einer dynamoelektrischen Maschine.

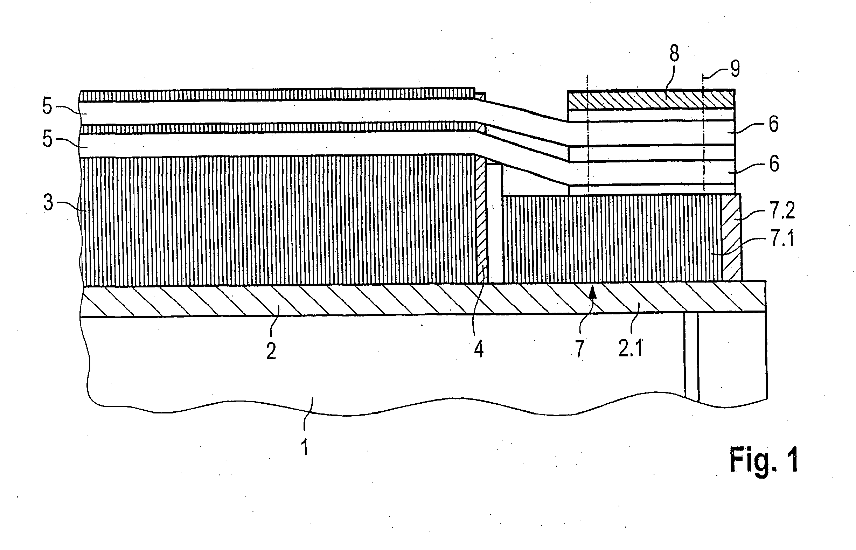

In Figur 1 erkennt man einen Rotor 1 einer dynamoelektrischen Maschine. Der Rotor hat einen Außendurchmesser, der mehrere Meter aufweisen kann, beispielsweise 5 oder 6 m. Eine Nabe 2 trägt ein Rotorblechpaket 3. Dieses ist mittels einer Druckplatte 4 axial verspannt. In die Nuten der Rotorbleche sind Wicklungen 5 eingelegt. Diese ragen axial mit den Wickelköpfen 6 aus dem Rotorblechpaket 3 hervor.

Zum Abstützen der Wickelköpfe 6 ist die Nabe um einen Nabenfortsatz 2.1 axial verlängert. Der Nabenfortsatz 2.1 trägt ein weiteres Blechpaket 7 mit Blechen 7.1 und einer Druckplatte 7.2. Die Wickelköpfe sind ferner von einem ringförmigen Stützkörper 8 umgeben. Dieser besteht aus mehreren biegesteifen, plattenartigen Ringabschnitten. Zum Zusammenspannen des Stützkörpers 8 und des Blechpaketes 7 des Nabenfortsatzes 2.1 dienen Zugbolzen 9.

Die gezeigte Ausführungsform ist in DE 195 19 127 C1 beschrieben.

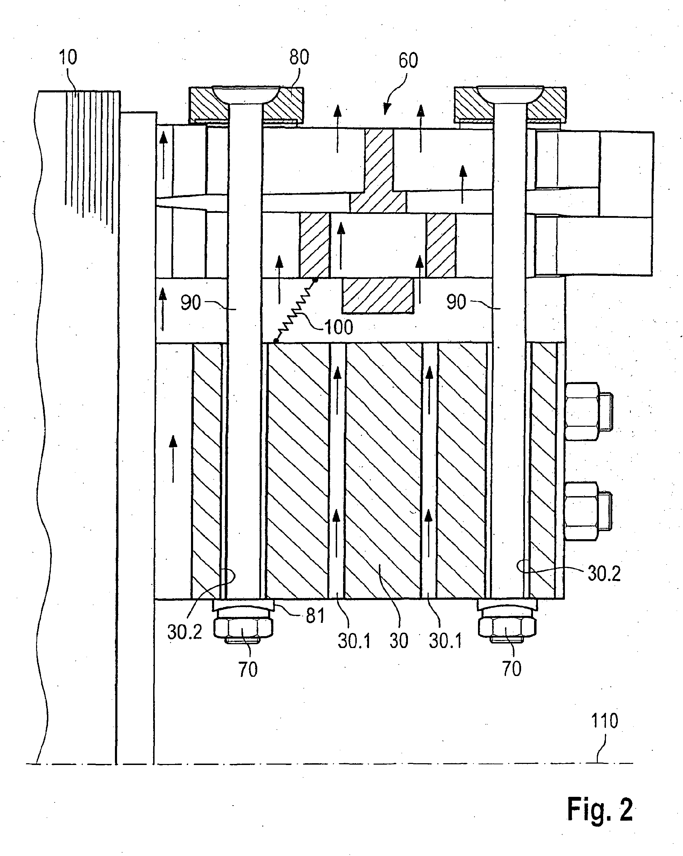

Die erfindungsgemäße Ausführungsform gemäß Figur 2 umfasst einen Rotorballen 10. Ein ringförmiger Wickelkopf 60 ist axial neben dem Rotorballen 10 angeordnet. Er verläuft koaxial zum Rotorballen 10. Die Maschine weist eine Drehachse 110 auf.

Man erkennt ferner einen Tragring 30. Tragring 30 ist geblecht und dient der Abstützung eines Wickelkopfes 60. Tragring 30 ist mit Belüftungskanälen 30.1 versehen, durch welche Kühlluft in radialer Richtung von innen nach außen strömt. Tragring 30 weist ferner Radialbohrungen 30.2 auf. Durch diese sind Zugstäbe 90 hindurchgeführt. Die Radialbohrungen 30.1 weisen gegenüber den Zugstäben 90 Übermaß auf, das heißt die Durchmesser der Zugstäbe 90 sind kleiner, als die lichte Weite der Radialbohrung 30.2.

Die Zugstäbe spannen den Tragring 30 und den Wickelkopf 60 zusammen. Die Zugstäbe 90 liegen an ihren radial äußeren und an ihren radial inneren Enden an entsprechenden Lagerkörpern an. Siehe die Lagerkörper 80 und 81 sowie die Spannmuttern 70. Dabei erlauben die Lagerkörper durch eine sphärische Gestaltung der betreffenden Lagerflächen ein Neigen der Zugstäbe 90 in einer Axialebene.

Die erfindungsgemäße Ausführungsform weist die folgenden Vorteile auf:

Im Bereich des stromdurchflossenen Wickelkopfes 60 findet eine Erwärmung und damit eine Ausdehnung in axialer Richtung statt, nicht aber im Bereich des Tragringes 30. Der Wickelkopf 60 hat dabei die Tendenz, die oberen Bereiche der Zugstäbe 90 in axialer Richtung mitzunehmen, und zwar vom Rotorballen 10 hinweg. Hingegen verbleiben die unteren Bereiche der Zugstäbe 90 relativ zum Rotorballen 10 an Ort und Stelle. Um dieser Dehnung des Wickelkopfes 60 Rechnung zu tragen, sind aufgrund der beschriebenen Gestaltung die Zugstäbe 90 kippbar, das heißt sie können im oberen Bereich der Lagerkörper 80 eine Axialbewegung hinweg vom Rotorballen 10 ausführen, während sie im Bereich der Lagerkörper 81 ortsfest bleiben. Dies wird ermöglicht durch die beiden Lagerkörper 80, 81 sowie durch das genannte Übermaß der Radialbohrungen 30.2 gegenüber den Zugstäben 90.

### Bezugszeichenliste

- 1: Rotor
- 2: Nabe
- 2.1: Nabenfortsatz
- 3: Rotorblechpaket
- 4: Druckplatte
- 5: Wicklungen
- 6: Wickelköpfe
- 7: Blechpaket des Nabenfortsatzes
- 7.1: Bleche
- 7.2: Druckplatte
- 8: Stützkörper
- 9: Zugstäbe
- 10: Rotorballen
- 20: Nabe
- 20.1: Nabenfortsatz
- 30: Tragring
- 30.1: Belüftungskanäle
- 30.2: Radialbohrungen
- 40: Ringscheibe
- 60: Wickelkopf
- 70: Spannmutter
- 80: Lagerkörper
- 81: Lagerkörper
- 90: Zugstäbe
- 100: Zugfeder
- 110: Drehachse

## Patentansprüche

1. Dynamoelektrische Maschine, umfassend die folgenden Bauteile beziehungsweise Merkmale:
1.1 einen Rotorballen (10);
1.2 einen ringförmigen Wickelkopf (60), der axial neben dem Rotorballen (10) und zu diesem koaxial angeordnet ist;
1.3 einen Tragring (30), der radial innerhalb des Wickelkopfes (60) und zu diesem koaxial angeordnet ist;
1.4 Wickelkopf (60) und Tragring (30) sind mit dem Rotorballen (10) drehfest;
1.5 Wickelkopf (60) und Tragring (30) sind in radialer Richtung durch Zugstäbe (90) miteinander verspannt, die durch Radialbohrungen (30.2) in den Wickelköpfen und im Tragring (30) hindurchgeführt sind;
1.6 die Zugstäbe (90) greifen mit ihren radial inneren Enden am Tragring (30), und mit ihren radial äußeren Enden an Lagerkörpern (80) an, die am Wickelkopf (60) anliegen;
**gekennzeichnet durch** die folgenden Merkmale:
1.7 die lichten Weiten der Radialbohrungen (30.2) im Tragkörper (30) weisen gegenüber den Durchmessern der Zugstäbe (90) Übermaß auf;
1.8 die Lagerung der radial inneren Enden der Zugstäbe (90) am Tragring (30) und der radial äußeren Enden der Zugstäbe (90) am Wickelkopf (60) erlauben eine begrenzte Kippbewegung der Zugstäbe (90) gegen die Radialrichtung.

2. Dynamoelektrische Maschine nach Anspruch 1, **dadurch gekennzeichnet, dass** wenigstens einige der Enden der Zugstäbe (90) mittels Lagerkörpern (80) gelagert sind, die eine sphärische Lagerfläche aufweisen.

## Claims

1. A dynamoelectric machine, comprising the following components or features:
1.1 a rotor body (10);
1.2 an annular winding head (60) which is arranged axially next to the rotor body (10) and coaxially in relation thereto;
1.3 a support ring (30) which is arranged radially inside the winding head (60) and coaxially in relation thereto;
1.4 the winding head (60) and the support ring (30) are torsion-proof with the rotor body (10);
1.5 the winding head (60) and the support ring (30) are clamped together in the radial direction by tension rods (90) which are guided through radial boreholes (30.2) in the winding heads and in the support ring (30); **characterized by** the following features:
1.6 the tension rods (90) engage with their radially inner ends on the support ring (30) and with their radially outer ends on the bearing blocks (80) which rest on the winding head (60);
1.7 the clearances of the radial boreholes (30.2) in the support body (30) are provided with an overdimension in relation to the diameters of the tension rods (90);
1.8 the bearing of the radially inner ends of the tension rods (90) on the support ring (30) and the radially outer ends of the tension rods (90) on the winding head (60) allow a limited tilting movement of the tension rods (90) against the radial direction.

2. A dynamoelectric machine according to claim 1, **characterized in that** at least some of the ends of the tension rods (90) are mounted by means of bearing blocks (80) which have a spherical bearing surface.

## Revendications

1. Machine dynamoélectrique, comprenant les composants ou caractéristiques suivants:
1.1 un corps de rotor (10);
1.2 une tête de bobine annulaire (60), disposé axialement à côté du corps de rotor (10) et coaxialement à celui-ci;
1.3 une bague de support (30), qui est disposé radialement à l'intérieur de la tête de bobine (60) et coaxialement à celle-ci;
1.4 la tête de bobine (60) et la bague de support (30) sont bloquées en rotation avec le corps de rotor (10);
1.5 la tête de bobine (60) et la bague de support (30) sont solidarisées dans le sens radial par l'intermédiaire de barres de traction (90) qui sont introduites à travers des alésages radiaux (30.2) dans les têtes de bobine (60) et dans la bague de support (30);
1.6 les barres de traction (90) viennent en contact par leurs extrémités intérieures dans le sens radial avec la bague de support (30) et par leurs extrémités extérieures dans le sens radial avec des corps d'appui (80) qui repose sur la tête de bobine (60);
présentant les caractéristiques suivantes:
1.7 les largeurs intérieures des alésages radiaux (30.2) dans le corps support (30) sont supérieures aux diamètres des barres de traction (90);
1.8 le logement des extrémités intérieures dans le sens radial des barres de traction (90) sur la bague de support (30) et des extrémités extérieures dans le sens radial des barres de traction (90) sur la tête de bobine (60) autorise un mouvement de bascule limité des barres de traction (90) dans le sens opposé au sens radial.

2. Machine dynamoélectrique selon la revendication 1, **caractérisé en ce qu'**au moins certaines des extrémités des barres de traction (90) sont prévues à l'aide de corps d'appui qui présentent une surface d'appui sphérique.
